# EUROPÄISCHE PATENTSCHRIFT

(11) **EP 2 405 317 B1**
(45) Veröffentlichungstag und Bekanntmachung des Hinweises auf die Patenterteilung: **18.12.2019**
(21) Anmeldenummer: 11005462.4
(22) Anmeldetag: 05.07.2011
(51) Int. Cl.: G06F 11/10, G05B 19/042

(54) **Verfahren zur sicheren Parametrierung eines Sicherheitsgeräts**
Method for entering parameters for a security device securely
Procédé de paramétrage assuré sûr d'un appareil

(30) Priorität: 07.07.2010 DE 102010026392
(43) Veröffentlichungstag der Anmeldung: 11.01.2012
(73) Patentinhaber: Leuze electronic GmbH + Co. KG, 73277 Owen/Teck (DE)
(72) Erfinder: Lohmann, Lutz, Dr., 82140 Olching (DE); Hörderich, Johann, 82291 Mammendorf (DE)
(74) Vertreter: Ruckh, Rainer Gerhard

(56) Entgegenhaltungen:
- WO-A2-2006/053668

## Beschreibung

Die Erfindung betrifft ein Verfahren zur sicheren Parametrierung eines Sicherheitsgeräts sowie eine Konfigurationseinheit zur Durchführung dieses Verfahrens.

Sicherheitsgeräte, auf welche sich die vorliegende Erfindung bezieht, werden im Bereich der Sicherheitstechnik, insbesondere im Bereich des Personenschutzes, eingesetzt. Beispiele für derartige Sicherheitsgeräte sind Sicherheitssensoren wie Lichtvorhänge, Kamerasysteme, Distanzsensoren und dergleichen. Mit derartigen Sicherheitssensoren werden beispielsweise Gefahrenbereiche an Maschinen und dergleichen überwacht, wobei in Abhängigkeit davon, ob mit dem Sicherheitssensor ein sicherheitskritischer Eingriff in dem Gefahrenbereich registriert wird oder nicht, dieser die Maschine abschaltet oder eingeschaltet hält. Zur Erfüllung der Sicherheitsanforderungen für den Einsatz im Personenschutz muss der jeweilige Sicherheitssensor einen sicheren, das heißt fehlersichern Aufbau aufweisen.

Ein Problem besteht jedoch darin, dass zur Anpassung an die jeweilige Applikation die Sicherheitsgeräte parametriert werden müssen. Um die sicherheitstechnischen Anforderungen zu erfüllen, muss diese Parametrierung ebenfalls sicher, das heißt fehlersicher erfolgen.

Bekannte Verfahren setzen zur Parametrierung von Sicherheitsgeräten Konfigurationseinheiten ein, die nach einem Rückleseverfahren arbeiten. Ein Bediener der Konfigurationseinheit gibt in diese den gewünschten Parameterwert ein. Dieser wird in der Konfigurationseinheit mit einer Prüfsumme versehen und an das Sicherheitsgerät gesendet, das hierzu an die Konfigurationseinheit angeschlossen sein muss. Im Sicherheitsgerät wird der Parameterwert gespeigespeichert, dann wird die Prüfsumme des Parameterwerts geprüft. Im Anschluss an diese Prüfung sendet das Sicherheitsgerät den erhaltenen Parameterwert mit der Prüfsumme zurück an die Konfigurationseinheit. Der zurückgesendete Parameterwert wird dem Bediener an der Konfigurationseinheit angezeigt, so dass dieser visuell prüfen kann, ob der eingegebene Parameterwert auch demjenigen entspricht, der in dem Sicherheitsgerät angekommen ist und abgespeichert wurde. Nachteilig hierbei ist, dass zum sicheren Einlesen von Parameterwerten das Sicherheitsgerät an die Konfigurationseinheit angeschlossen sein muss, da die Parameterwerte von dem Sicherheitsgerät in die Konfigurationseinheit rückgelesen werden müssen. Weiterhin ist nachteilig, dass das Einlesen der Parameterwerte in das Sicherheitsgerät, sowie das anschließende Rücklesen relativ zeitaufwendig ist, so dass das Zeitintervall zwischen der ersten Anzeige des Parameterwerts an der Konfigurationseinheit unmittelbar nach Eingabe in die Konfigurationseinheit und der zweiten Anzeige des Parameterwerts an der Konfigurationseinheit, nachdem dieser von dem Sicherheitsgerät wieder zurückgelesen wurde, relativ groß ist. Dieser relativ große Zeitversatz erschwert dem Bediener den Vergleich bei den Anzeigen, so dass es zu Verifikationsfehlern kommen kann, wenn der Bediener in der Konfigurationseinheit die Übereinstimmung der Anzeigewerte bestätigen soll.

Die WO 2006 / 053 668 A2 betrifft ein Verfahren zur sicheren Parametrierung gemäß IEC 61508 SIL 3 oder EN 954-1 Kategorie 4 eines elektronischen Geräts, wobei zur Parametrierung vorgesehene Parameterwerte über eine Anwenderoberfläche einer elektronischen Bedieneinrichtung ausgewählt oder eingegeben werden und anschließend an das elektronische Gerät übertragen werden. Die ausgewählten oder eingegebenen Parameterwerte werden in wenigstens einem von der Bedieneirichtung zugreifbaren Speicher gehalten und zur Verifikation der sicheren Parametrierung aus dem Speicher wenigstens einmal rückgelesen. Optional wird zusätzlich der zu übertragende Parametersatz zu einer Folge von Bytes mit Parameterwerten und einer Checksumme kombiniert. Nach Übertragung des kombinierten Parametersatzes wird die Checksumme des übertragenen Parametersatzes zurück gelesen und mit der in einem von der Bedieneinrichtung aus zugreifbaren Speicher gehaltenen Checksumme des entsprechenden Parametersatzes vor Übertragung verglichen.

Der Erfindung liegt die Aufgabe zugrunde, auf möglichst einfache Weise eine sichere Parametrierung von Sicherheitsgeräten zu ermöglichen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Das erfindungsgemäße Verfahren dient zur sicheren Parametrierung eines Sicherheitsgeräts und umfasst folgende Verfahrensschritte:
- Eingabe oder Auswahl eines Parameterwerts durch einen Bediener in eine Konfigurationseinheit, Laden des Parameterwerts in einen Arbeitsspeicher einer Rechnereinheit der Konfigurationseinheit und darauf folgende erste Anzeige des Parameterwerts an einer Anzeigeeinheit,
- Verschlüsselung des Parameterwerts in der Konfigurationseinheit und Speichern wenigstens eines sich aus der Verschlüsselung ergebenden Merkmals, in einem Speicher wobei der Parameterwert selbst nicht abgespeichert wird,
- zweite Anzeige des Parameterwerts an der Anzeigeeinheit nach dessen Verifizierung anhand des Merkmals, wobei die zweite Anzeige zeitlich und räumlich korreliert zur ersten Anzeige erfolgt,
- Wertevergleich des mit den beiden Anzeigen angezeigten Parameterwerts durch den Bediener und Bestätigen einer gültigen Parameterangabe bei vorhandener Übereinstimmung,
- rücklesefreies Übertragen von gültig eingegebenen Parameterwerten aus der Konfigurationseinheit in das Sicherheitsgerät.

Die Grundidee des Verfahrens besteht darin, mit der Konfigurationseinheit eine sichere Eingabe und Verarbeitung von Parameterwerten zu ermöglichen, die es dem Bediener erlaubt, wenigstens zwei Anzeigen der Parameterwerte, die zeitlich direkt hintereinander erfolgen und somit vom Bediener gut kontrolliert werden können, die korrekte Eingabe der Parameterwerte sicher überprüfen zu können. Die Anzeigen der Parameterwerte erfolgen dabei räumlich korreliert an der Anzeigeeinheit, der Konfigurationseinheit, die vorteilhaft von einem Bildschirm ausgebildet ist. Um Verwechslungen der verschiedenen Anzeigen der Parameterwerte zu vermeiden, werden die Parameterwerte in den verschiedenen Anzeigen unterschiedlich dargestellt, beispielsweise in unterschiedlichen Farben, Schrifttypen, Größen oder mit unterschiedlichen Hintergründen.

Ein wesentlicher Aspekt des erfindungsgemäßen Verfahrens besteht in der manipulationssicheren Behandlung der eingegebenen oder ausgewählten Parameterwertenterwerten in der Konfigurationseinheit, so dass eine sichere Parametereingabe auch insbesondere dann gewährleistet ist, wenn die Konfigurationseinheit selbst keinen sichereren, das heißt fehlersicheren Aufbau aufweist. Die Konfigurationseinheit kann damit kostengünstig ausgebildet sein, beispielsweise in Form eines Standard-Personalcomputers.

Die manipulationssichere Verarbeitung der Parameterwerte wird dadurch gewährleistet, dass nach Auswahl oder Eingabe eines Parameterwerts dieser einerseits zunächst unmittelbar angezeigt wird. Dann wird der Parameterwert selbst nicht abgespeichert, sondern verbleibt im Arbeitsspeicher der Rechnereinheit der Konfigurationseinheit, insbesondere des Betriebssystems der Rechnereinheit. Vielmehr erfolgt eine Verschlüsselung des Parameterwerts, wobei dann nur wenigstens ein mit der Verschlüsselung gewonnenes Merkmal des Parameterwerts abgespeichert wird, um dann anhand des gespeicherten Merkmals den Parameterwert zu vergleichen. Nach erfolgtem Vergleich erfolgt die zweite Anzeige des Parameterwerts, so dass der Bediener anhand eines Wertevergleichs beider Anzeigen die Korrektheit der Eingabe oder Auswahl eines Parameterwerts bestätigen kann.

Gemäß einer ersten Variante, die nicht Teil der Erfindung ist, erfolgt eine manipulationssichere Behandlung eines Parameterwerts dadurch, dass in der Konfigurationseinheit für den Parameterwert eine Prüfsumme gebildet wird, die als Merkmal in einem Speicher der Konfigurationseinheit gespeichert wird, und dass vor der zweiten Anzeige des Parameterwerts in der Konfigurationseinheit geprüft wird, ob dessen Prüfsumme mit der gespeicherten Prüfsumme übereinstimmt.

Gemäß einer zweiten Variante wird der Parameterwert in der Konfigurationseinheit kodiert und die daraus gewonnene Kodierung als Merkmal in einem Speicher der Konfigurationseinheit gespeichert.

Generell können auch mit der Kodierung unterschiedliche Merkmale der Parameterwerte gewonnen werden, so dass durch Dekodierung der Kodierung der Parameterwert zurückgewonnen wird und dieser bei der zweiten Anzeige an der Anzeigeeinheit angezeigt wird.

Ein wesentlicher Vorteil des erfindungsgemäßen Verfahrens besteht darin, dass allein durch die wenigstens zwei Anzeigen des Parameterwerts und die zwischen dieser erfolgende manipulationssichere Behandlung der Parameterwerte eine sichere Parametereingabe mit der Konfigurationseinheit gewährleistet ist. Insbesondere braucht das Sicherheitsgerät nicht an die Konfigurationseinheit während der Parametrierung angeschlossen sein, da die Parameterwerte von der Konfigurationseinheit rücklesefrei an das Sicherheitsgerät übertragen werden, das heißt ein Rücklesen der Parameterwerte aus dem Sicherheitsgerät muss für die Parametrierung nicht mehr durchgeführt werden. Die Übertragung der Parameterwerte von der Konfigurationseinheit in das Sicherheitsgerät kann somit unabhängig vom Parametriervorgang erfolgen.

Ein weiterer wesentlicher Vorteil des erfindungsgemäßen Verfahrens besteht darin, dass zur Verschlüsselung von Parameterwerten insbesondere auch Datenkompressionsverfahren angewendet werden können. Bei komplexen Parameterwerten wie Bilddaten kann durch die Verschlüsselung somit eine enorme Datenreduktion erfolgen. Vorteilhaft wird dies dazu ausgenutzt, um die verschlüsselten daten-komprimierten Merkmale der Bilddaten von der Konfigurationseinheit an das Sicherheitsgerät zu übertragen, um sie dort dann wieder zu entschlüsseln, das heißt zu dekomprimieren.

Die Erfindung wird im Folgenden anhand der Zeichnungen erläutert. Es zeigen:
- Figur 1:: Funktionsdiagramm einer sicheren Parametereingabe für eine erste Ausführungsform der Konfigurationseinheit.
- Figur 2:: Erweiterung des Funktionsdiagramms gemäß Figur 1 durch ein Auslesen von Parameterwerten aus der Konfigurationseinheit in ein Sicherheitsgerät.
- Figur 3:: Funktionsdiagramm einer sicheren Parametrierung eines Sicherheitsgeräts mit einer zweiten Ausführungsform der erfindungsgemäßen Konfigurationseinheit.

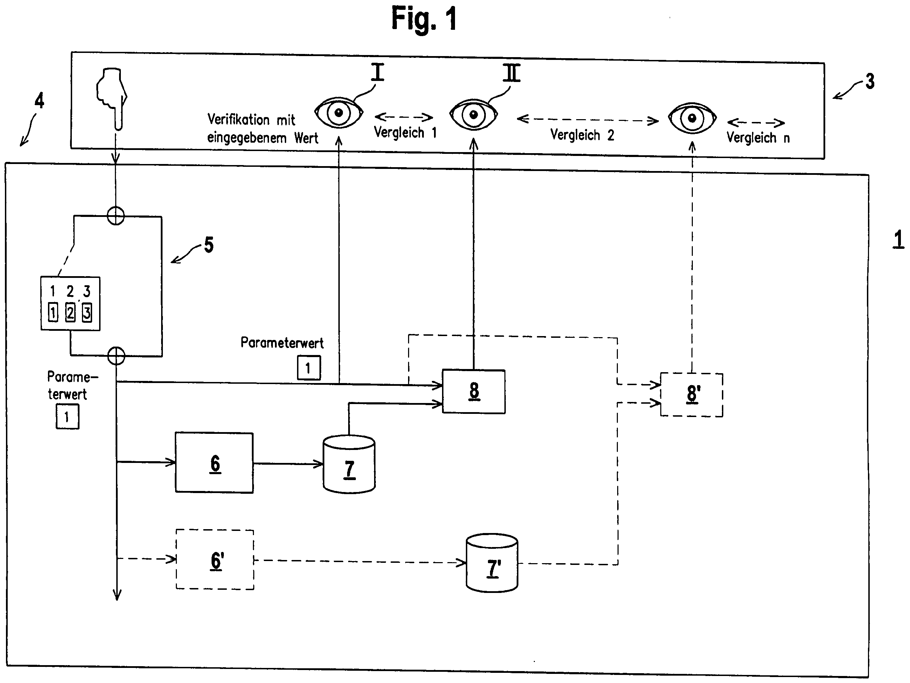

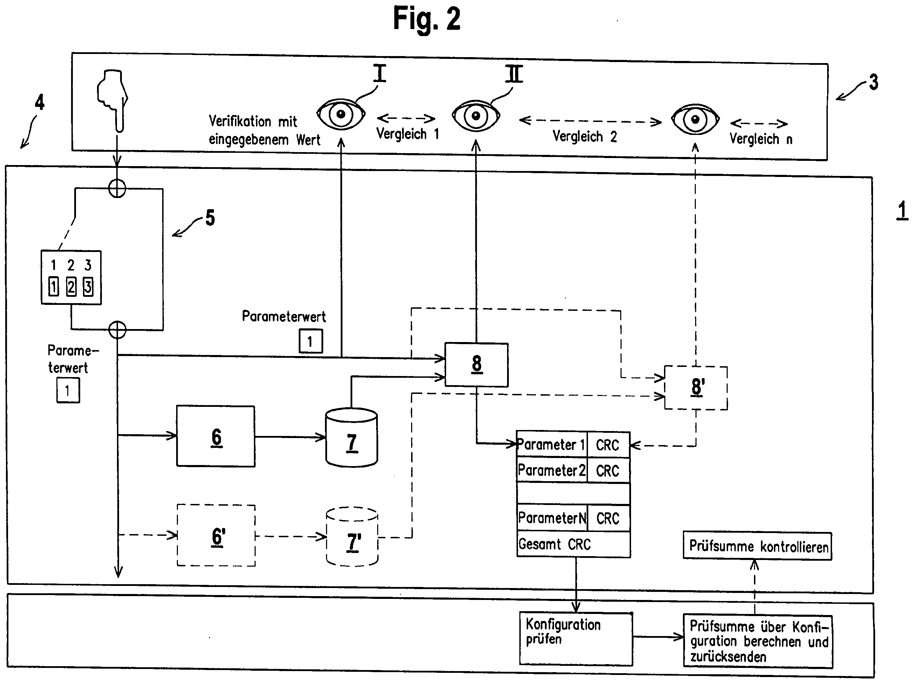

Die Figuren 1 und 2 zeigen Funktionsdiagramme für eine erste Ausführungsform einer Konfigurationseinheit 1 zur sicheren Parametrierung eines Sicherheitsgeräts 2, wie zum Beispiel eines Sicherheitssensors.

Das Funktionsdiagramm gemäß Figur 1 zeigt den Ablauf der sicheren Eingabe von Parameterwerten in die Konfigurationseinheit 1. Dabei ist, wie aus Figur 1 ersichtlich, hierzu das Sicherheitsgerät 2 nicht an die Konfigurationseinheit 1 angeschlossen. Die Konfigurationseinheit 1 selbst bildet eine nicht fehlersichere Einheit und besteht beispielsweise aus einem handelsüblichen Personalcomputer. Die so ausgebildete Konfigurationseinheit 1 umfasst eine Ein-/Ausgabeeinheit 3 mit einem Bildschirm und bekannten Eingabemitteln wie einer Tastatur und einer Maus. Weiterhin weist die Konfigurationseinheit 1 eine Rechnereinheit 4 auf, die eine für die Parametrierung erforderliche Software aufweist.

Die Parametrierung wird durch einen Bediener vorgenommen, der mit einer Eingabe an der Ein- /Ausgabeeinheit 3 (dargestellt in Figur 1 in Form einer Hand) einen Parameterwert eingibt, oder, wie im Ausführungsbeispiel gemäß Figur 1, einen Parameterwert aus einem Auswahlspeicher 5 auswählt.

Der Parameterwert wird dann in den Arbeitsspeicher der Rechnereinheit 4 geladen, um diesen zunächst dem Bediener mit einer ersten Anzeige (in Figur 1 mit I bezeichnet) an einem bestimmten Ort des Bildschirms mit einer bestimmten Darstellungsform (das heißt einer bestimmten Schrift, Farbe und dergleichen) anzuzeigen. Parallel zu dieser Anzeige wird der Parameterwert zu einem CRC-Generator 6 geführt, wo für den Parameterwert eine Prüfsumme berechnet wird. Die dabei bestimmte Prüfsumme, die im vorliegenden Fall eine CRC-Prüfsumme ist, wird als den Parameterwert eindeutig kennzeichnendes Merkmal in einen Speicher 7 eingelesen und abgespeichert. Der Speicher 7 kann von einer Festplatte, einem RAM-Speicher oder auch von einem externen Speichermedium gebildet sein. In die Prüfsumme kann generell der Ablagepfad des Parameterwerts mit aufgenommen sein, um den Ablageort des Parameterwerts innerhalb der gesamten Konfigurationsdaten darzustellen. Der Parameterwert selbst wird jedoch nicht abgespeichert. Vielmehr wird zu dessen Verifikation dieser in einem Prüfmodul 8 dahingehend abgeprüft, ob dessen Prüfsumme mit der im Speicher gespeicherten Prüfsumme übereinstimmt. Ist dies nicht der Fall, wird eine Fehlermeldung ausgegeben und die Parametrierung abgebrochen. Wird eine Übereinstimmung im Prüfmodul 8 festgestellt, wird der Parameterwert mit einer weiteren Anzeige (in Figur 1 mit II bezeichnet) dem Bediener nochmals angezeigt. Die zweite Anzeige erfolgt an derselben Stelle des Bildschirms, jedoch mit einer anderen Darstellungsform wie die erste Anzeige.

Der Bediener führt dann einen Vergleich der ersten und zweiten Anzeige durch und stellt so fest, ob der Parameterwert den er ausgewählt hatte, auch tatsächlich in der Konfigurationseinheit 1 übernommen wurde.

Durch dieses Rücklesen des Parameterwerts und die manipulationssichere Behandlung des Parameterwerts durch Speichern eines diesen kennzeichnenden Merkmals im Speicher 7 mit einer anschließenden Überprüfung dieses Merkmals, wird eine sichere Parametrierung erzielt, selbst für den Fall, dass die Konfigurationseinheit 1 selbst keine fehlersichere Einheit bildet. Bei dieser Parametrierung muss das Sicherheitsgerät 2 nicht an die Konfigurationseinheit 1 angeschlossen sein. Insbesondere muss der Parameterwert zur Durchführung der Parametrierung nicht in das Sicherheitsgerät 2 übertragen und dann aus diesem wieder in die Konfigurationseinheit 1 rückgelesen werden. Da zwischen den beiden Anzeigen des Parameterwerts allein in der Konfigurationseinheit 1 eine manipulationssichere Behandlung des Konfigurationseinheits 1 durch die Bildung der Prüfsumme und deren nachfolgende Überprüfung im Prüfmodul 8 erfolgt, kann die zweite Anzeige sehr schnell auf die erste Anzeige erfolgen, das heißt es existiert ein enger zeitlicher Bezug zwischen den beiden Anzeigen, was dem Bediener die Prüfung der korrekten Parametereingabe erheblich erleichtert.

Wie mit den in Figur 1 gestrichelt dargestellten Funktionsflächen angedeutet, kann die manipulationssichere Behandlung des Parameterwerts dahingehend erweitert sein, dass neben dem CRC-Generator 6 ein oder mehrere weitere gegebenenfalls vom CRC-Generator 6 verschiedene CRC-Generatoren 6' vorgesehen sind. Der Parameterwert wird dann allen CRC-Generatoren 6 gleichzeitig zugeführt. Die dabei generierten Prüfsummen werden jeweils in einem dem jeweiligen CRC-Generator 6, 6' zugeordneten Speicher 7, 7'abgespeichert. Dementsprechend sind auch mehrere Prüfmodule 8, 8' vorgesehen. Für den Parameterwert wird dann zeitlich dicht nacheinander in den einzelnen Prüfmodulen 8, 8' geprüft, ob die Prüfsumme des Parameterwerts mit der Prüfsumme im jeweiligen Speicher 7, 7' übereinstimmt. Darauf wird nach jeder Prüfung eine Anzeige des Parameterwerts am Bildschirm erzeugt, das heißt bei Einsatz von N CRC-Generatoren 6, erfolgen neben der ersten Anzeige jeweils zeitlich dicht hintereinander weitere N Anzeigen des Parameterwerts, die der Bediener visuell auf Übereinstimmung vergleicht.

Figur 2 zeigt eine Erweiterung des Diagramms gemäß Figur 1 dahingehend, dass das Sicherheitsgerät 2 an einem Ausgang der Konfigurationseinheit 1 angeschlossen ist.

Das Diagramm gemäß Figur 2 zeigt einen Block von N Parameterwerten, die jeweils mit einer Prüfsumme (CRC) versehen sind. Der gesamte Block ist mit einer Gesamt-Prüfsumme (Gesamt-CRC) versehen. Dieser Block von Parameterwerten wird rücklesefrei in das Sicherheitsgerät 2 eingelesen. Dort wird die Konfiguration der Parameterwerte geprüft und abgespeichert. Die Konfigurationsprüfung erfolgt durch eine Prüfsummenbildung im Sicherheitsgerät 2, die zurück in die Konfigurationseinheit 1 übertragen und dort kontrolliert wird.

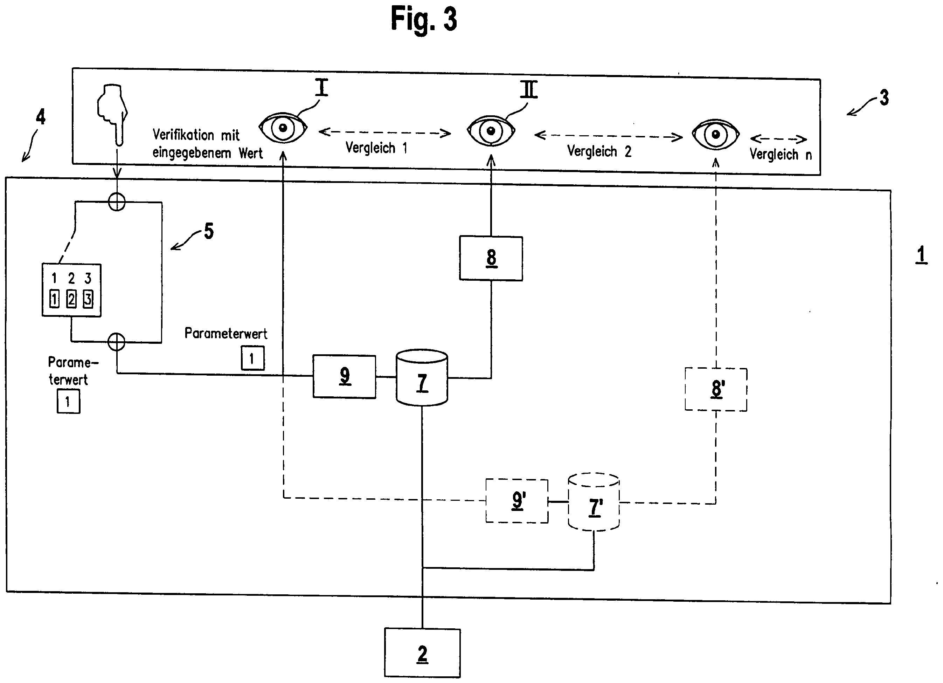

Figur 3 zeigt eine erfindungsgemässe Variante der Ausführungsform der Konfigurationseinheit 1 von Figur 1. Die Ausführungsform gemäß Figur 3 unterscheidet sich von der Ausführungsform gemäß Figur 1 allein dadurch, dass zur manipulationssicheren Behandlung eines Parameterwerts anstelle von einem oder mehreren CRC-Generatoren 6 ein oder mehrere Kodiereinheiten 9, 9' vorgesehen sind.

Ein über den Auswahlspeicher 5 ausgewählter Parameterwert wird wieder sofort mit der ersten Anzeige am Bildschirm angezeigt und parallel einer Kodiereinheit 9 oder (wie in Figur 2 gestrichelt eingedeutet) mehreren Kodiereinheiten 9, 9' zugeführt. In jeder Kodiereinheit 9, 9' erfolgt eine Kodierung, das heißt Verschlüsselung des Parameterwerts, wodurch aus dem Parameterwert bestimmte Werte abgeleitet werden. Die Kodiereinheiten 9, 9' können verschiedenartig ausgebildet sein, so dass in diesen aus dem Parameterwert unterschiedliche Merkmale abgeleitet werden. Insbesondere können mit den Kodiereinheiten 9, 9' auch Komprimierungen der Parameterwerte durchgeführt werden, das heißt bei der Verschlüsselung erfolgt durch die Generierung der Merkmale eine Datenreduktion.

Die in jeweils einer Kodiereinheit 9, 9' generierten Merkmale werden in einen nachgeordneten Speicher 7, 7' eingelesen und abgespeichert, der im vorliegenden Fall einen Merkmalsspeicher bildet.

Die Merkmale eines Speichers 7 werden dann ausgelesen und in einer Dekodiereinheit dekodiert, so dass der ursprüngliche Parameterwert wieder erhalten wird und in einer weiteren, auf die erste Anzeige folgenden Anzeige am Bildschirm angezeigt wird. Analog zur Ausführungsform gemäß Figur 1 erfolgt dazu ein Wertevergleich der einzelnen Anzeigen des Parameterwerts am Bildschirm durch den Bediener.

Nach erfolgter Parametrierung können, wie in Figur 2 dargestellt, die kodierten Werte der Parameterwerten aus den Speichern 7, 7' in das Sicherheitsgerät 2 rücklesefrei eingegeben werden.

### Bezugszeichenliste

- (1): Konfigurationseinheit
- (2): Sicherheitsgerät
- (3): Ein- /Ausgabeeinheit
- (4): Rechnereinheit
- (5): Auswahlspeicher
- (6): CRC-Generator
- (7): Speicher
- (8): Prüfmodul
- (9): Kodiereinheit

## Patentansprüche

1. Verfahren zur sicheren Parametrierung eines Sicherheitsgeräts (2), umfassend folgende Verfahrensschritte:
• Eingabe oder Auswahl eines Parameterwerts durch einen Bediener in eine Konfigurationseinheit (1), Laden des Parameterwerts in einen Arbeitsspeicher einer Rechnereinheit (4) der Konfigurationseinheit (1) und darauffolgende erste Anzeige des Parameterwerts an einer Anzeigeeinheit,
• Verschlüsselung des Parameterwerts in der Konfigurationseinheit (1) und Speichern wenigstens eines sich aus der Verschlüsselung ergebenden Merkmals in einem Speicher (7), wobei der Parameterwert selbst nicht abgespeichert wird,
• zweite Anzeige des Parameterwerts an der Anzeigeeinheit nach dessen Verifizierung anhand des abgespeicherten Merkmals, wobei die zweite Anzeige zeitlich und räumlich korreliert zur ersten Anzeige erfolgt,
• Wertevergleich des mit den beiden Anzeigen angezeigten Parameterwerts durch den Bediener und Bestätigen einer gültigen Parameterangabe bei vorhandener Übereinstimmung,
• rücklesefreies Übertragen von gültig eingegebenen Parameterwerten aus der Konfigurationseinheit (1) in das Sicherheitsgerät (2).

2. Verfahren nach Anspruch 1, **dadurch gekennzeichnet, dass** der Parameterwert bei der ersten und zweiten Anzeige in unterschiedlichen Erscheinungsformen angezeigt wird.

3. Verfahren nach einem der Ansprüche 1 oder 2, **dadurch gekennzeichnet, dass** die erste und zweite Anzeige des Parameterwerts an derselben Stelle der Anzeigeeinheit mit geringem zeitlichem Abstand erfolgen.

4. Verfahren nach einem der Ansprüche 1 bis 3, **dadurch gekennzeichnet, dass** in der Konfigurationseinheit (1) für den Parameterwert eine Prüfsumme gebildet wird, die als Merkmal in einem Speicher (7) der Konfigurationseinheit (1) gespeichert wird.

5. Verfahren nach Anspruch 4, **dadurch gekennzeichnet, dass** vor der zweiten Anzeige des Parameterwerts in der Konfigurationseinheit (1) geprüft wird, ob dessen Prüfsumme mit der gespeicherten Prüfsumme übereinstimmt.

6. Verfahren nach einem der Ansprüche 1 bis 3, **dadurch gekennzeichnet, dass** der Parameterwert in der Konfigurationseinheit (1) kodiert wird und die daraus gewonnene Kodierung als Merkmal in einem Speicher (7) der Konfigurationseinheit (1) gespeichert wird.

7. Verfahren nach Anspruch 6, **dadurch gekennzeichnet, dass** mit der Kodierung unterschiedliche Merkmale der Parameterwerte gewonnen werden.

8. Verfahren nach einem der Ansprüche 6 oder 7, **dadurch gekennzeichnet, dass** durch Dekodierung der Kodierung der Parameterwert zurückgewonnen wird und dieser bei der zweiten Anzeige an der Anzeigeeinheit angezeigt wird.

9. Verfahren nach einem der Ansprüche 1 bis 8, **dadurch gekennzeichnet, dass** für die Parameterwerte die Merkmale rücklesefrei an das Sicherheitsgerät (2) übertragen werden.

10. Verfahren nach einem der Ansprüche 1 bis 9, **dadurch gekennzeichnet, dass** nach der zweiten Anzeige des Parameterwerts nach wenigstens einer weiteren Verifizierung wenigstens eine weitere Anzeige des Parameterwerts erfolgt.

11. Konfigurationseinheit zur sicheren Parametrierung eines Sicherheitsgeräts (2) mit einer eine Anzeigeeinheit aufweisenden Ein- /Ausgabeeinheit (3), so ausgebildet, dass mittels der Ein- /Ausgabeeinheit (3) ein Parameterwert in einer Konfigurationseinheit (1) eingegeben oder in einer Konfigurationseinheit (1) ausgewählt ist und in einen Arbeitsspeicher einer Rechnereinheit der Konfigurationseinheit (1) geladen ist, wobei unmittelbar auf die Eingabe oder Auswahl folgend an der Anzeigeeinheit eine erste Anzeige des Parameterwerts erfolgt, mit Mitteln zur Verschlüsselung des Parameterwerts und mit einem Speicher (7), in welchem wenigstens ein sich aus der Verschlüsselung ergebendes Merkmal in einem Speicher (7) gespeichert wird, wobei der Parameterwert selbst nicht abgespeichert wird, mit Mitteln zur Verifizierung des Parameterwerts anhand des gespeicherten Merkmals, wobei der dabei verifizierte Parameterwert mit einer zweiten Anzeige, die zeitlich und räumlich korreliert zur ersten Anzeige ist, an der Anzeigeeinheit angezeigt und, so dass durch einen Bediener der Konfigurationseinheit (1) ein Wertevergleich des mit den beiden Anzeigen angezeigten Parameterwerts durchführbar ist, mit Mitteln zur Bestätigung einer gültigen Parametereingabe, welche bei Übereinstimmung des Parameterwerts in den beiden Anzeigen vorliegt, und mit einem Ausgang, über welchen gültig eingegebene Parameterwerte rücklesefrei aus der Konfigurationseinheit (1) in das Sicherheitsgerät (2) übertragbar sind.

12. Konfigurationseinheit nach Anspruch 11, **dadurch gekennzeichnet, dass** diese einen nicht fehlersicheren Aufbau aufweist.

13. Konfigurationseinheit nach Anspruch 12, **dadurch gekennzeichnet, dass** die Anzeigeeinheit von einem Bildschirm gebildet ist.

14. Konfigurationseinheit nach Anspruch 13, **dadurch gekennzeichnet, dass** die Konfigurationseinheit so ausgebildet ist, dass der Parameterwert mit der ersten und zweiten Anzeige am selben Ort des Bildschirms in unterschiedlicher Darstellung oder an unterschiedlichen Orten des Bildschirms dargestellt wird.

15. Konfigurationseinheit nach einem der Ansprüche 11 bis 14, **dadurch gekennzeichnet, dass** die Konfigurationseinheit so ausgebildet ist, dass der Arbeitsspeicher der Rechnereinheit (4) zur aktuellen Bearbeitung von Eingabebefehlen genutzt wird, und dass der Parameterwert zwischen der ersten und zweiten Anzeige nicht gespeichert wird sondern im Arbeitsspeicher verbleibt.

16. Konfigurationseinheit nach einem der Ansprüche 11 bis 15, **dadurch gekennzeichnet, dass** die Konfigurationseinheit so ausgebildet ist, dass der Speicher (7) von einem RAM-Speicher, einer Festplatte oder einem externen Speichermedium gebildet ist.

## Claims

1. A method for securely entering parameters for a safety device (2), comprising the following method steps:
- entering or selecting a parameter value by an operator into a configuration unit (1), loading the parameter value into a working memory of a computer unit (4) of the configuration unit (1) and subsequent first display of the parameter value on a display unit,
- encrypting the parameter value in the configuration unit (1) and storing at least one feature resulting from the encryption in a memory (7), the parameter value itself not being stored,
- second display of the parameter value on the display unit after verification thereof by means of the stored feature, the second display taking place in temporal and spatial correlation with the first display,
- the operator compares the value of the parameter displayed with the two displays and confirms a valid parameter entry if there is a match,
- a read-back-free transfer of valid parameter values entered from the configuration unit (1) to the safety device (2).

2. A method according to claim 1, **characterised in that** the parameter value is displayed in different display forms in the first and second display.

3. A method according to one of claims 1 or 2, **characterised in that** the first and second display of the parameter value takes place at the same point of the display unit with a short time interval.

4. A method according to one of claims 1 to 3, **characterised in that** a check sum is formed in the configuration unit (1) for the parameter value, which check sum is stored as a characteristic in a memory (7) of the configuration unit (1).

5. A method according to claim 4, **characterised in that**, before the second display of the parameter value in the configuration unit (1), it is checked whether its checksum matches the stored checksum.

6. A method according to one of claims 1 to 3, **characterised in that** the parameter value is coded in the configuration unit (1) and the coding obtained therefrom is stored as a feature in a memory (7) of the configuration unit (1).

7. A method according to claim 6, **characterised in that** different features of the parameter values are obtained with the coding.

8. A method according to one of claims 6 or 7, **characterised in that** the parameter value is recovered by decoding the coding and this is displayed on the display unit during the second display.

9. A method according to one of claims 1 to 8, **characterised in that** the features for the parameter values are transmitted to the safety device (2) without being read back.

10. A method according to one of claims 1 to 9, **characterised in that** after the second display of the parameter value after at least one further verification at least one further display of the parameter value takes place.

11. A configuration unit for securely entering parameters for a safety device (2) with an input/output unit (3) having a display unit, designed in such a way that a parameter value is entered in a configuration unit (1) or selected in a configuration unit (1) by means of the input/output unit (3) and is loaded into a working memory of a computer unit of the configuration unit (1), wherein a first display of the parameter value takes place immediately after the input or selection on the display unit, with means for encrypting the parameter value and with a memory (7) in which at least one feature resulting from the encryption is stored in a memory (7), wherein the parameter value itself is not stored, with means for verifying the parameter value on the basis of the stored feature, wherein the thereby verified parameter value is displayed on the display unit with a second display, which is temporally and spatially correlated to the first display, and so that a value comparison of the parameter value displayed with the two displays can be carried out by an operator of the configuration unit (1), having means for confirming a valid parameter input which is present in the two displays when the parameter value matches, and having an output via which validly input parameter values can be transmitted from the configuration unit (1) without being read back into the safety device (2).

12. A configuration unit according to claim 11, **characterised in that** it has a non-fault-proof structure.

13. A configuration unit according to claim 12, **characterised in that** the display unit is formed by a screen.

14. A configuration unit according to claim 13, **characterised in that** the configuration unit is designed in such a way that the parameter value with the first and second display is displayed at the same location on the screen in different representation or at different locations on the screen.

15. A configuration unit according to one of claims 11 to 14, **characterised in that** the configuration unit is designed such that the working memory of the computer unit (4) is used for the current processing of input commands, and **in that** the parameter value between the first and second display is not stored but remains in the working memory.

16. A configuration unit according to any of claims 11 to 15, **characterised in that** the configuration unit is arranged such that the memory (7) is formed by a RAM memory, a hard disk or an external storage medium.

## Revendications

1. Procédé pour le paramétrage sûr d'un dispositif de sécurité (2), comprenant les étapes de procédé suivantes :
- saisir ou sélectionner une valeur de paramètre par un opérateur dans une unité de configuration (1), charger la valeur de paramètre dans une mémoire de travail d'une unité informatique (4) de l'unité de configuration (1) et le premier affichage suivant de la valeur de paramètre sur un afficheur,
- chiffrer la valeur du paramètre dans l'unité de configuration (1) et mémoriser dans une mémoire (7) au moins une caractéristique résultant du chiffrement, la valeur du paramètre elle-même n'étant pas mémorisée,
- afficher une seconde fois la valeur du paramètre sur l'unité d'affichage après vérification de celle-ci au moyen de la fonction mémorisée, le deuxième affichage s'effectuant en corrélation temporelle et spatiale avec le premier affichage,
- l'opérateur compare la valeur du paramètre affiché avec les deux afficheurs et confirme une entrée de paramètre valide s'il y a une correspondance,
- transférer sans relecture les valeurs de paramètres valables saisies de l'unité de configuration (1) vers le dispositif de sécurité (2).

2. Procédé selon la revendication 1, **caractérisé en ce que** la valeur du paramètre est affichée sous différentes formes d'affichage dans le premier et le second affichage.

3. Procédé selon l'une des revendications 1 ou 2, **caractérisé en ce que** le premier et le second affichage de la valeur du paramètre ont lieu au même endroit de l'unité d'affichage avec un intervalle de temps court.

4. Procédé selon l'une des revendications 1 à 3, **caractérisé en ce qu'**une somme de contrôle est formée dans l'unité de configuration (1) pour la valeur du paramètre, laquelle somme de contrôle est enregistrée comme caractéristique dans une mémoire (7) de l'unité de configuration (1).

5. Procédé selon la revendication 4, **caractérisé en ce que**, avant le second affichage de la valeur du paramètre dans l'unité de configuration (1), on vérifie si sa somme de contrôle correspond à la somme de contrôle enregistrée.

6. Procédé selon l'une des revendications 1 à 3, **caractérisé en ce que** la valeur du paramètre est codée dans l'unité de configuration (1) et le codage ainsi obtenu est mémorisé en tant que caractéristique dans une mémoire (7) de l'unité de configuration (1).

7. Procédé selon la revendication 6, **caractérisé en ce que** différentes caractéristiques des valeurs de paramètres sont obtenues avec le codage.

8. Procédé selon l'une des revendications 6 ou 7, **caractérisé en ce que** la valeur du paramètre est récupérée par décodage du codage et celle-ci est affichée sur l'unité d'affichage pendant le second affichage.

9. Procédé selon l'une des revendications 1 à 8, **caractérisé en ce que** les caractéristiques des valeurs de paramètres sont transmises au dispositif de sécurité (2) sans être relues.

10. Procédé selon l'une des revendications 1 à 9, **caractérisé en ce qu'**après le second affichage de la valeur du paramètre après au moins une vérification supplémentaire, au moins un autre affichage de la valeur du paramètre a lieu.

11. Unité de configuration pour le paramétrage sûr d'un dispositif de sécurité (2) avec une unité d'entrée/sortie (3) comportant une unité d'affichage, conçue de telle sorte qu'une valeur de paramètre est entrée dans une unité de configuration (1) ou sélectionnée dans une unité de configuration (1) au moyen de l'unité d'entrée/sortie (3) et est chargée dans une mémoire de travail d'une unité ordinateur de l'unité de configuration (1), dans laquelle un premier affichage de la valeur du paramètre a lieu immédiatement après l'entrée ou la sélection sur l'unité d'affichage, avec des moyens pour chiffrer la valeur du paramètre et avec une mémoire (7) dans laquelle au moins une caractéristique résultant du chiffrement est enregistrée dans une mémoire (7), la valeur du paramètre elle-même n'étant pas enregistrée, avec des moyens pour vérifier la valeur de paramètre sur la base de la caractéristique mémorisée, la valeur de paramètre ainsi vérifiée étant affichée sur l'unité d'affichage avec un second affichage, qui est corrélé dans le temps et dans l'espace au premier affichage, et de sorte qu'une comparaison de la valeur de paramètre affichée avec les deux écrans puisse être effectuée par un opérateur de l'unité de configuration (1), avec des moyens pour confirmer une entrée de paramètre valide qui est présente dans les deux afficheurs lorsque la valeur du paramètre correspond, et avec une sortie par laquelle des valeurs de paramètre valablement entrées peuvent être transmises par l'unité de configuration (1) sans être relues dans le dispositif de sécurité (2).

12. Unité de configuration selon la revendication 11, **caractérisée en ce qu'**elle présente une structure sans défaut.

13. Unité de configuration selon la revendication 12, **caractérisée en ce que** l'unité d'affichage est formée par un écran.

14. Unité de configuration selon la revendication 13, **caractérisée en ce que** l'unité de configuration est conçue de telle sorte que la valeur du paramètre avec le premier et le second affichage est affichée au même endroit sur l'écran dans une représentation différente ou à différents endroits sur l'écran.

15. Unité de configuration selon l'une des revendications 11 à 14, **caractérisée en ce que** l'unité de configuration est conçue de telle sorte que la mémoire de travail de l'unité informatique (4) est utilisée pour le traitement courant des commandes d'entrée, et **en ce que** la valeur du paramètre entre le premier et le second affichage n'est pas mémorisée mais reste dans la mémoire de travail.

16. Unité de configuration selon l'une quelconque des revendications 11 à 15, **caractérisée en ce que** l'unité de configuration est agencée de telle sorte que la mémoire (7) est constituée d'une mémoire RAM, d'un disque dur ou d'un support de stockage externe.
